# EUROPÄISCHE PATENTSCHRIFT

(11) **EP 0 308 689 B1**
(45) Veröffentlichungstag und Bekanntmachung des Hinweises auf die Patenterteilung: **12.05.1993**
(21) Anmeldenummer: 88114060.2
(22) Anmeldetag: 29.08.1988
(51) Int. Cl.: H01F 41/10, H01F 5/04, H02K 3/52, H02K 5/22

(54) **Verfahren zur Herstellung eines elektrischen Anschlussteils mit in einem Kunststoff-Isolationskörper eingespritzten elektrischen Kontakten**
Method of manufacturing an electric connection device with electric terminals moulded by injection in an insulating bobbin of plastic material
Procédé de fabrication d'un organe de raccordement électrique comprenant des contacts électriques moulés par injection dans un corps de bobine isolant plastique

(30) Priorität: 11.09.1987 DE 3730608
(43) Veröffentlichungstag der Anmeldung: 29.03.1989
(73) Patentinhaber: SAIA AG, CH-3280 Murten (CH)
(72) Erfinder: Renkl, Klaus, Dipl.-Ing., D-8702 Kürnach (DE); Pieper, Wolfgang, D-8700 Würzburg (DE); Ahrens, Peter, D-7114 Pfedelbach (DE)
(74) Vertreter: Steiner, Martin

(56) Entgegenhaltungen:
- EP-A- 0 178 456
- EP-A- 0 179 259
- DE-A- 1 538 884
- DE-A- 3 514 532
- DE-B- 1 227 149
- DE-C- 2 758 700
- FR-A- 1 302 317
- GB-A- 2 120 971
- US-A- 3 496 504
- US-A- 3 517 365
- US-A- 3 651 566
- PATENT ABSTRACTS OF JAPAN, Band 11, Nr.88, (E-490) [2535], 18. März 1987; & JP-A-61 240 839 (TOSHIBA CORP.) 27-10-1986

## Beschreibung

Die Erfindung bezieht sich auf ein Verfahren zur Herstellung eines elektrischen Anschlußteils mit in einen Kunststoff-Isolationskörper eingespritzten elektrischen Kontakten gemäß Oberbegriff des Anspruches 1; ein derartiger Spulenkörper ist aus der DE-PS 27 58 700 bekannt.

Bei dem durch die DE-PS 27 58 700 bekannten Spulenkörper sind in die einstückig über ein Filmscharnier an den einen Stirnflansch des Spulenkörpers angeformte Anschlußplatte in Reihe hintereinander Anschlußstifte eingegossen, die mit ihren jeweils fluchtenden äußeren und inneren Stiftenden in der Gebrauchsstellung der Anschlußplatte aus dieser radial nach außen bzw. innen herausragen; die Anschlußplatte ist zur Bewicklung des Spulenkörpers bzw. zum Anschluß der Spulenwicklungsenden an die inneren Stiftenden seitlich von dem Spulenkörper wegklappbar und anschließend in ihre Gebrauchsstellung mit den angeschlossenen Spulenwicklungsenden über den Wickelraum umklappbar und am anderen Stirnflansch des Spulenkörpers durch Verrastung fixierbar.

Aufgabe vorliegender Erfindung ist ein Verfahren zur automatengerechten Herstellung eines Spulenkörpers mit an seinem einen Stirnflansch schwenkbar gehaltener und nach dem Bewickeln des Spulenkörpers über den Wickelraum schwenkbar und an dem anderen Stirnflansch verrastbaren Anschlußplatte, in die Anschlußstifte mit inneren Stiftenden für die Wicklungsenden und äußeren Stiftenden für eine äußere, vorzugsweise mittels eines Anschlußsteckers zu kontaktierenden Anschlußleitung einzugießen sind.

Die Lösung dieser Aufgabe gelingt bei einem Verfahren der eingangs genannten Art erfindungsgemäß durch die Lehre des Anspruches 1; vorteilhafte Ausgestaltungen der Erfindung sind jeweils Gegenstand der Unteransprüche.

Das erfindungsgemäße Verfahren erlaubt mit geringem Werkzeugaufwand und wenigen einfachen, von Handhabungsautomaten ausführbaren Fertigungsschritten die Herstellung des Spulenkörpers mit daran angelenkter Anschlußplatte und darin eingegossenen Anschlußstiften. Das der Positionierung der Anschlußstifte vor dem Eingießen in die Anschlußplatte dienende Wechselmagazin kann in vorteilhafter Weise als wiederverwendbare Mehrfachform vorgesehen werden, die z.B. nach dem Festeingießen der Anschlußstifte in die Anschlußplatte von der Spritzgußform einfach abgezogen werden kann, wobei sich die Anschlußstifte aufgrund ihrer festen Halterung im Spulenkörper bzw. in der Spritzgußform aus dem Wechselmagazin selbsttätig lösen.

Um einerseits den Spulenkörper auf einfache Weise maschinell bewickeln und die Spulenwicklungsenden mit den inneren Stiftenden der Anschlußstifte kontaktieren und andererseits die äußeren Stiftenden der Anschlußstifte derart ausrichten und zugentlastend haltern zu können, daß ein handelsüblicher Miniaturstecker aufsteckbar und abziehbar bzw. ein Flachbandkabel anschließbar ist, ist nach einer vorteilhaften Ausgestaltung des erfindungsgemäßen Verfahrens vorgesehen, daß die äußeren Stiftenden der Anschlußstifte gegenüber den inneren Stiftenden durch ein abgewinkeltes Zwischenstück gegeneinander versetzt angeordnet und mit dem Zwischenstück derart in die Anschlußplatte eingespritzt werden, daß die äußeren Stiftenden mit möglichst dichtem Abstand vorzugsweise in Reihe nebeneinander und die inneren Stiftenden mit möglichst großem gegenseitigem Abstand vorzugsweise nicht fluchtend zueinander gehalten werden.

Durch entsprechende Abwinkelung des Zwischenstückes zwischen den äußeren Stiftenden einerseits und den inneren Stiftenden andererseits und entsprechendes Einspritzen der Anschlußstifte in die Anschlußplatte ist es in fertigungstechnisch einfacher Weise möglich, daß entweder nach einer ersten Ausgestaltung der Erfindung in Wickelstellung der Anschlußplatte die äußeren Stiftenden und die inneren Stiftenden senkrecht zur Spulenachsrichtung und in Gebrauchsstellung der Anschlußplatte in Gegenrichtung zur Wickelstellung senkrecht zur Spulenachsrichtung aus der Anschlußplatte herausragen bzw. nach einer weiteren Ausgestaltung der Erfindung jeweils in Wickelstellung der Anschlußplatte die äußeren Stiftenden in Spulenachsrichtung sowie die inneren Stiftenden senkrecht zur Spulenachsrichtung und in Gebrauchsstellung der Anschlußplatte die äußeren Stiftenden in Gegenrichtung zur Wickelstellung senkrecht zur Spulenachsrichtung sowie die inneren Stiftenden in Gegenrichtung zur Wickelstellung senkrecht zur Spulenachsrichtung aus der Anschlußplatte herausragen.

Die Erfindung sowie weitere vorteilhafte Ausgestaltungen werden im folgenden anhand schematisch dargestellter Ausführungsbeispiele in der Zeichnung näher erläutert; darin zeigen:
- FIG 1: in einem axialen Längsschnitt eine durch ein Wechselmagazin abgeschlossene Spritzgußform für einen Spulenkörper mit einstückig angeformter Anschlußplatte und darin eingegossenen Anschlußstiften;
- FIG 2: das Wechselmagazin gemäß FIG 1 in der Ansicht II in der Ausführung als Mehrfachform mit zwei mit Anschlußstiften bestückten Anschlußplatten;
- FIG 3: die Vorderseitenansicht des Wechselmagazins gemäß FIG 2;
- FIG 4: die Seitenansicht des Wechselmagazins gemäß FIG 2;
- FIG 5: den Bestückungsablauf eines Wechselmagazins mit aus einem mit einzelnen Anschlußstiften gefüllten Vorratsbehälter;
- FIG 6: den Bestückungsablauf eines Wechselmagazins mit aus einem Stangenmagazin entnommenen Anschlußstiften;
- FIG 7: den Bestückungsablauf eines Wechselmagazins mit aus Drahtrollen gefertigten Anschlußstiften;
- FIG 8: in einem axialen Längsschnitt einen ersten Spulenkörper mit in Spritzstellung gezeigter, einstückig angeformter Anschlußplatte;
- FIG 9: den Spulenkörper gemäß FIG 8 in Ansicht II;
- FIG 10: den Spulenkörper gemäß FIG 8 in Ansicht III;
- FIG 11: in vergrößerter Detaildarstellung die Anschlußplatte des Spulenkörpers gemäß FIG 8-10;
- FIG 12: in einem axialen Längsschnitt einen zweiten Spulenkörper mit in Wickelstellung gezeigter, einstückig angeformter Anschlußplatte;
- FIG 13: den Spulenkörper gemäß FIG 12 in Ansicht VI;
- FIG 14: den Spulenkörper gemäß FIG 12 in Ansicht VII;
- FIG 15: in vergrößerter Detaildarstellung die Anschlußplatte des Spulenkörpers gemäß FIG 12;
- FIG 16: eine als getrenntes Bauteil gefertigte mittels Rasthaken an dem Stirnflansche des Spulenkörpers fixierbare Anschlußplatte;
- FIG 17: die der Anschlußplatte gemäß FIG 10 zugeordneten Stirnflansche;
- FIG 18: eine als getrenntes Bauteil gefertigte und an stirnflanschseitigen Rasthaken fixierte Anschlußplatte;
- FIG 19: eine in einen Axialschlitz eines Motorgehäuses eingeschobene Anschlußplatte.

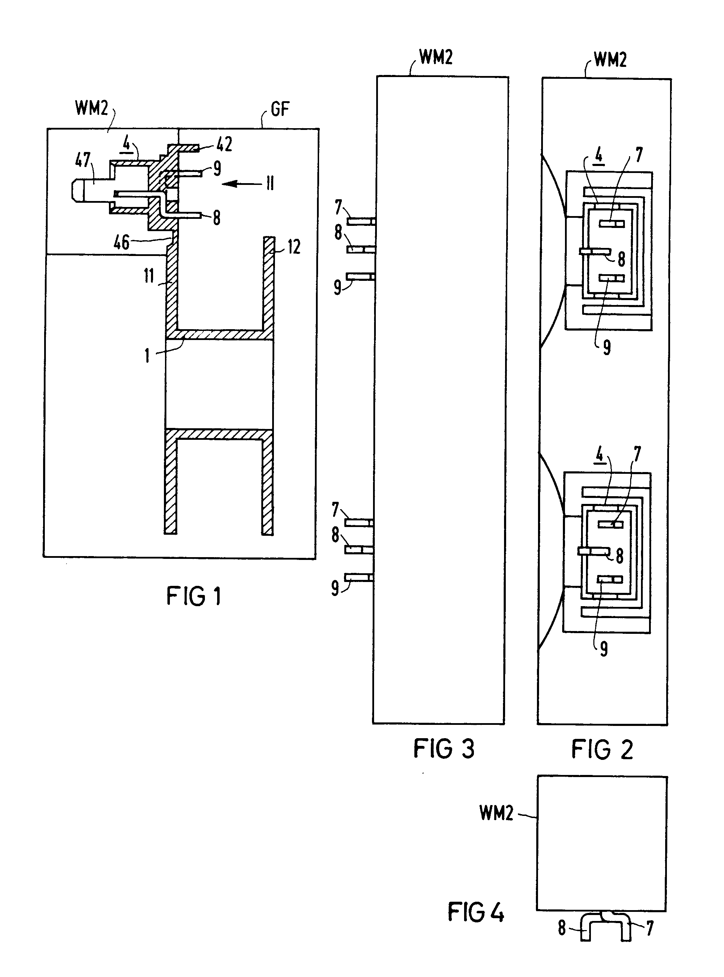

FIG 1 zeigt eine Spritzgußform GF zum Spritzgießen von ein oder mehreren Spulenkörpern 1 mit Stirnflanschen 11,12 und an dem einen Stirnflansch über ein Scharniergelenk 46 angespritzter Anschlußplatte 4 mit darin eingespritzten Anschlußstiften, von denen in der Schnittdarstellung die Anschlußstifte 8,9 mit ihren äußeren bzw. inneren Stiftenden sichtbar sind.

Erfindungsgemäß sind die in die Anschlußplatte 4 einzuspritzenden Anschlußstifte zuvor in ihre in der Anschlußplatte einzunehmende betriebsmäßige gegenseitige Position in ein Wechselmagazin WM1 bzw.WM2 aufgenommen, das mit den darin positionierten Anschlußstiften der Spritzgußform zugeführt wird und einen Abschlußteil der Spritzgußform GF bildet.

FIG 2-4 zeigen ein als Mehrfachform für zwei Anschlußplatten ausgebildetes Wechselmagazin WM2 mit darin in ihrer endgültigen betriebsmäßigen Position jeweils für jede Anschlußplatte gehalterten Anschlußstiften 7,8,9.

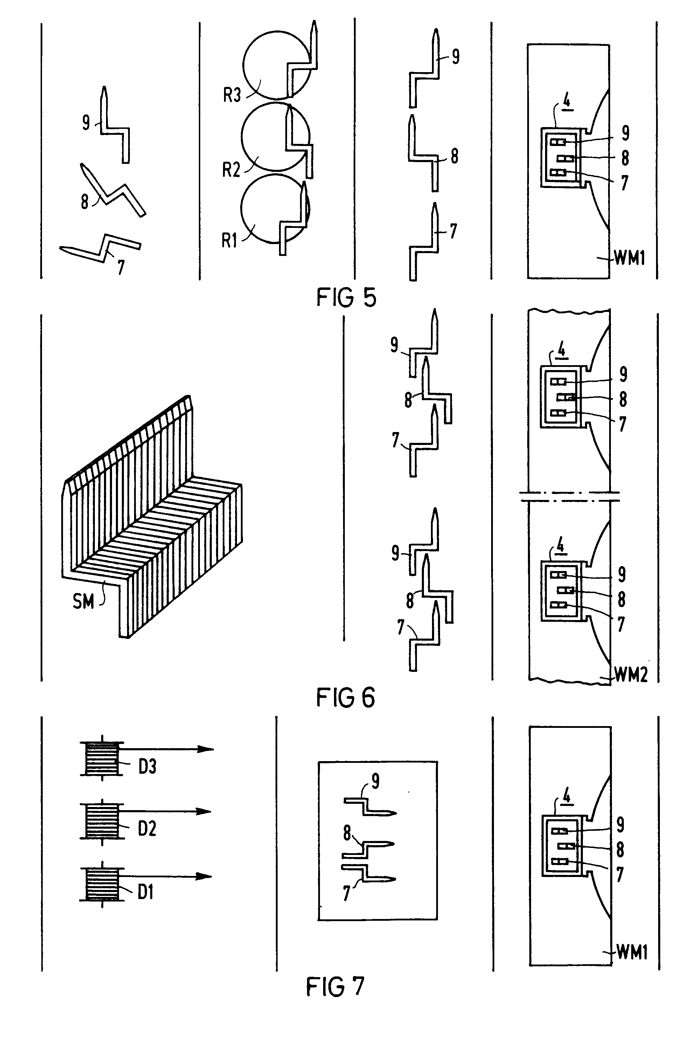

FIG 5-7 zeigen drei vorteilhafte Ausführungen der Herstellung und Vormagazinierung bzw. Ausrichtung der Anschlußstifte 7,8,9 und die anschließende Bestückung eines als Doppelform ausgebildeten Wechselmagazins WM2 gemäß FIG 6 bzw. eines als Einfachform ausgebildetes Wchselmagazin WM1 gemäß FIG 5 bzw. FIG 7.

Gemäß FIG 5 werden die Anschlußstifte 7,8,9 zunächst in einer Drahtbiege-Prägestation aus Vierkantdraht abgelänkt, gebogen, angeprägt und vereinzelt. Anschließend werden die Anschlußstifte 7,8,9 in Rüttlern R1,R2,R3 vereinzelt und lagegerecht entsprechend in ihrer betriebsmäßigen Anschlußplatten-Postition in einer Übergabestation vereinzelt. Die letzte Darstellung der FIG 5 zeigt dann die mit den in ihrer betriebsmäßigen Lage in dem Wechselmagazin WM1 in der Form für die Anschlußplatte 4 positionierten Anschlußstifte 7,8,9.

Gemäß FIG 6 sind die wiederum von einem Vierkantdraht abgelänkten, angeprägten, gebogenen einzelnen Anschlußstifte 7,8,9 zu einem Stangenmagazin SM aneinander in Reihe positioniert und in ihrer Position z.B. durch Kleben miteinander verbunden. Die Bestückung des Wechselmagazins WM2 erfolgt durch Abschieben der Anschlußstifte 7,8,9 von dem Stangenmagazin SM und ihrer Positionierung gemäß der betriebsfertigen Lage im Wechselmagazin WM2 selbst, das hier als Doppelform ausgebildet ist.

Gemäß FIG 7 werden die Anschlußstifte von mit Vierkantdraht bestückten Draht-Rollen D1,D2,D3 entsprechend der Zahl der in einer Anschlußplatte zu halternden Anschlußstifte abgelänkt, gebogen und angeprägt und anschließend entsprechend ihrer späteren Betriebslage wiederum ähnlich wie zuvor gemäß FIG 5 in ein als Einfachform ausgebildetes Wechselmagazin WM1 eingesteckt und positioniert.

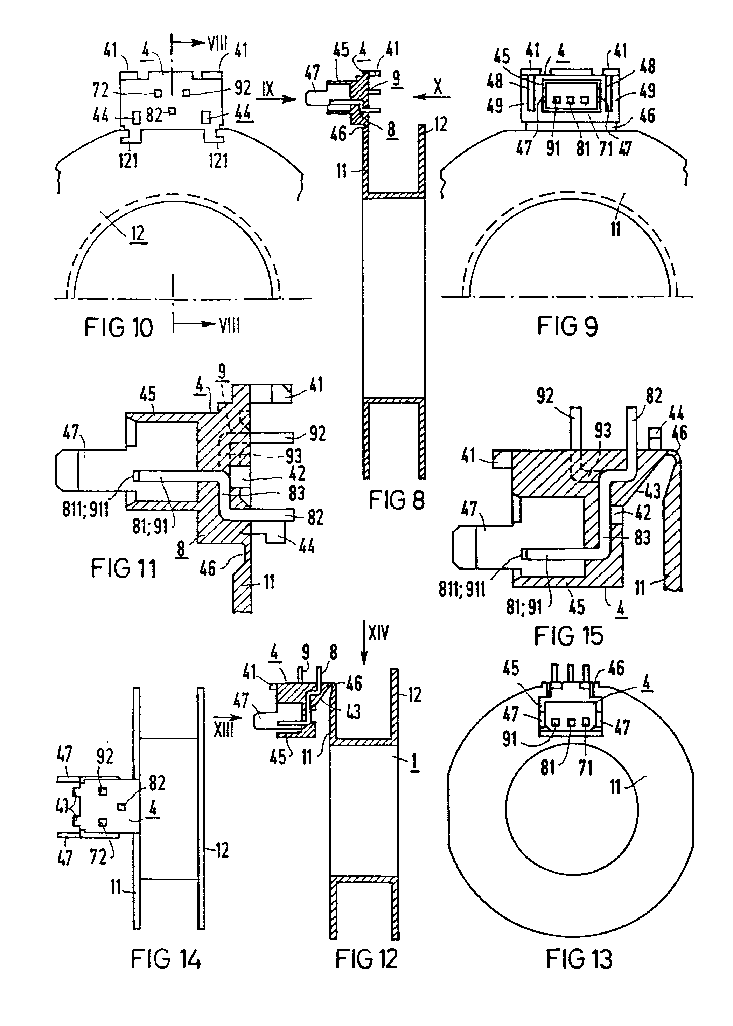

FIG 8 zeigt in einem axialen Längsschnitt einen Spulenkörper 1, in dessen Wickelraum zwischen den beiden Stirnflanschen 11,12 eine hier nicht dargestellte Erregerspule maschinell einzuwickeln ist. An den äußeren Rand des einen Stirnflansches 11 ist über ein Filmscharnier 46 eine Anschlußplatte 4 einstückig angegossen, die in FIG 8-11 in ihrer sogenannten Spritzstellung dargestellt ist. In dieser Spritzstellung wird der Spulenkörper mit einstückig angeformter Anschlußplatte aus der Spritzgußform entnommen. Durch weiteres Schwenken um 90° im Gegenuhrzeigersinn wird die Wickelstellung und im Uhrzeigersinn die Gebrauchsstellung erreicht.

In die Anschlußplatte 4 sind drei, aus einem Vierkantdraht geformte Anschlußstifte 7,8,9 mit äußeren Stiftenden 71,81,91 sowie inneren Stiftenden 72,82,92 derart eingegossen, daß sie einerseits gemäß FIG 2 aus der Oberseite der Anschlußplatte 4 gemäß FIG 9 in Reihe hintereinander, in dichtestmöglichem Abstand entsprechend dem Rastermaß eines außen aufzusteckenden Miniatursteckers oder eines außen zu kontaktierenden Flachbandkabels und andererseits gemäß FIG 10 aus der Unterseite der Anschlußplatte 4 in weitestgehendem gegenseitigen Abstand in Dreiecksanordnung herausragen.

Nach dem Einwickeln der Erregerspule in den Wickelraum zwischen den Stirnflanschen 11,12 und dem Umwickeln bzw. Kontaktieren der inneren Stiftenden an der Unterseite der Anschlußplatte 4 wird diese aus ihrer Wickelstellung, d.h. aus einer gegenüber der dargestellten Spritzstellung um 90° gegen den Uhrzeigersinn geschwenkten Stellung über den Wickelraum umgelegt und am anderen Stirnflansch 12 in ihrer Gebrauchsstellung durch Verrastung fixiert; dazu dienen an der Anschlußplatte 4 einstückig angeformte Rastnasen 41,41, die in korrespondierende Rastöffnungen 121,121 im Stirnflansch 12 einrasten.

Wie insbes. aus FIG 11 ersichtlich, bestehen die Anschlußstifte 7,8,9 jeweils aus einem äußeren Stiftende 71,81,91, die fluchtend in Reihe im Rastermaß eines Miniatursteckers angeordnet sind, und aus einem inneren Stiftende 72,82,92, die durch ein abwinkelndes Zwischenstück 73,83,93 derart versetzt gegenüber ihren jeweiligen äußeren Stiftenden 71,81,91 in die Anschlußplatte 4 eingegossen sind, daß sie einen für die Zugänglichkeit des Fadenführers eines Wickelautomaten vorteilhaften gegenseitig großen Abstand aufweisen; der gegenseitig vorteilhafte Dreiecksabstand ist aus FIG 10 ersichtlich.

An die Oberseite der Anschlußplatte 4 ist einstückig eine Steckerwanne 45 angegossen, die die äußeren Stiftenden 71,81,91 einerseits als Schutzkappe umgibt und andererseit als Einführ- und Fixierhilfe für einen auf die äußeren Stiftenden aufsteckbaren Miniatursteckers dient. Als weitere Einführhilfe sind an beiden Längsseiten der Steckerwanne 45 noch zusätzliche in Steckrichtung vorstehende Führungslaschen 47 angeformt. Zur sicheren Kontaktierung des Miniatursteckers mit den äußeren Stiftenden dienen weiterhin an die Auslaufenden der Stiftenden 71,81,91 angeprägte Anschrägungen 711,811 911. Eine Formöffnung 42 an der Unterseite der Anschlußplatte 4 im Bereich des Überganges zwischen den jeweiligen äußeren Stiftenden und dem anschließenden Zwischenstück dient in vorteilhafter Weise zur Zuführung eines Stützmittels der Anschlußstifte beim Eingießen in die Anschlußplatte 4 innerhalb der Spritzgußform.

Zur Gewährleistung einer schlaufenfreien Führung der von der Erregerspule im Wickelraum zwischen den Stirnflanschen 11,12 wegführenden Spulenwicklungsenden zu den inneren Stiftenden 72,82,92 beim Umklappen der Anschlußklappe 4 aus ihrer Wickelstellung in ihre Gebrauchsstellung dienen an die Unterseite der Anschlußplatte 4 zusätzlich einstückig angeformte Abspannhaken 44,44, um welche die Spulenwicklungsenden im Zuge ihres Verlaufs zu den inneren Stiftenden 72,82,92 vorzugsweise straff gehalten werden. Die Abspannhaken 44,44 liegen dazu zweckmäßigerweise in der Nähe des Filmscharniers 46 und somit der Schwenkachse der Anschlußplatte 4 sowie beidseitig außerhalb der Lage der inneren Anschlußenden 72,82,92 der Anschlußstifte 7,8,9.

Wie insbes. aus FIG 9 ersichtlich, sind an die Seitenkante der Anschlußplatte 4 aus der Zeichenebne hervorragende Seitenführungskanten 48 mit einstückig mitangeformt, die sich mit ihren Außenkanten gegen die Ränder eines stirnseitig offenen Axialschlitzes eines rohr- bzw. topfförmigen Motorgehäuses anlegen, in den die Spule eingesteckt wird; dabei wird die durch den Schlitz nach radial außen ragende Anschlußplatte 4 gleichzeitig als isolierte Durchführung durch das Motorgehäuse mitbenutzt. Die seitlich außerhalb der Seitenführungskanten 48 vorgesehenen Unterlegkanten 49 greifen bei dem Einschieben des Spulenkörpers in das Motorgehäuse unter dessen innere Gehäusewandung, so daß eine zusätzliche mechanische Lagesicherungshilfe beim Aufdrücken bzw. beim Abziehen des Steckers von den äußeren Stiftenden gegeben ist.

Während FIG 8-11 eine erste Ausgestaltung eines erfindungsgemäßen Spulenkörpers zeigt, bei der in Gebrauchsstellung der Anschlußplatte die äußeren Stiftenden 71,81,91 senkrecht zur Spulenachsrichtung aus der Anschlußplatte herausragen, zeigen FIG 12-15 bei ansonsten im wesentlichen äquivalenten Bauteilen insofern eine andere Ausgestaltung des erfindungsgemäßen Spulenkörpers, als jeweils in Wickelstellung der Anschlußplatte die äußeren Stiftenden 71,81,91 in Spulenachsrichtung sowie die inneren Stiftenden 72,82,92 senkrecht zur Spulenachsrichtung und in Gebrauchsstellung der Anschlußplatte die äußeren Stiftenden 71,81,91 in Gegenrichtung zur Wickelstellung senkrecht zur Spulenachsrichtung sowie die inneren Stiftenden 72,82,92 in Gegenrichtung zur Wickelstellung parallel zur Spulenachsrichtung aus der Anschlußplatte herausragen. Dazu sind gemäß FIG 15 in dem dargestellten Ausführungsbeispiel die äußeren Stiftenden der Anschlußplatte durch ein zweifach abwinkelndes Zwischenstück mit den inneren Stiftenden der Anschlußstifte verbunden; die Anschlußplatte ist in beiden Ausführungsbeispielen jeweils um einen Winkel von 180° von der Wickel- zur Gebrauchsstellung zu schwenken.

Zur axialen Abstützung der Anschlußplatte 4 bei gemäß FIG 12-15 in Spulenachsrichtung axial auf die äußeren Stiftenden aufzusteckenden, mit den äußeren Anschlußleitungen zu verbindenden Miniatursteckers sind in vorteilhafter Weise an die Anschlußplatte 4 Stützrippen 43 angeformt, mittels derer der axiale Aufsteckdruck von der Anschlußplatte 4 in den Stirnflansch 11 abgelenkt werden kann.

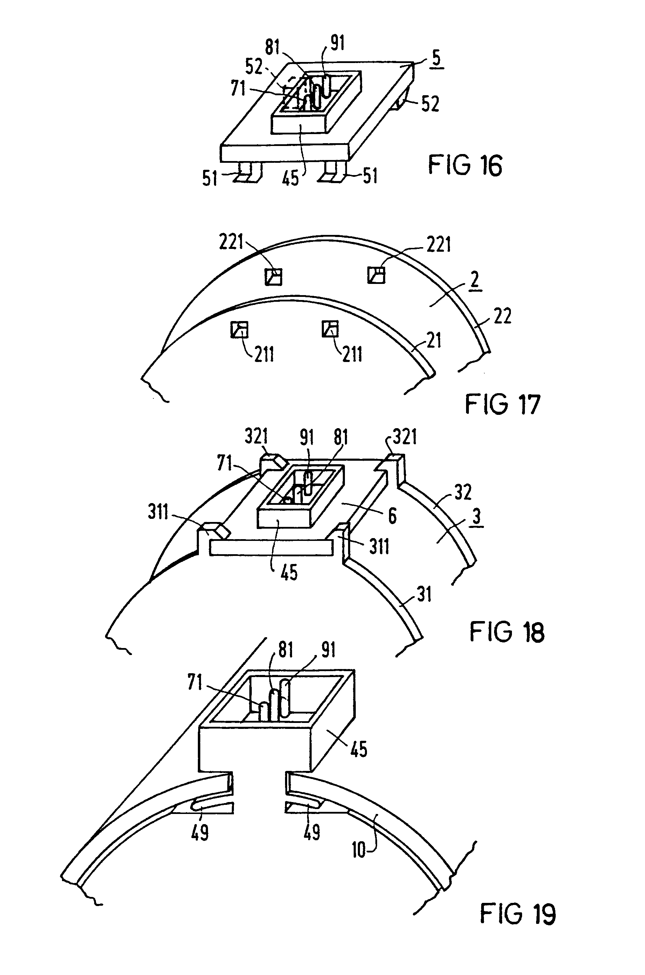

FIG 16,17 zeigen eine erste Ausführung einer als getrenntes Bauteil gespritzten Anschlußplatte 5 mit einstückig angeformten ersten Rastnasen 51 und zweiten Rastnasen 52 die in zugeordnete Rastöffnungen 211,211 bzw.221,221 der Stirnflansche 21 bzw.22 eines Spulenkörpers 2 mit den an den Anschlußstiften 7,8,9 angeschlossenen Spulenwicklungsenden in der Gebrauchsstellung der Anschlußplatte 5 einrasten.

Alternativ zu dem Spulenkörper gemäß FIG 16,17 zeigt FIG 18 eine weitere Ausgestaltung des erfindungsgemäßen Spulenkörpers, bei dem eine als getrenntes Bauteil gefertigte Anschlußplatte 6 nach dem Kontaktieren der Anschlußstifte 7,8,9 mit ihren äußeren Stiftenden 71,81,91 mit den Spulenwicklungsenden an den Stirnflanschen 31,32 eines Spulenkörpers 3 mittels direkt an den Rand der Stirnflansche 31 bzw.32 angegossener Rasthaken 311,311 bzw.321,321 fixiert ist.

FIG 19 zeigt eine mit radialen Hinterschneidungen versehene, in einen stirnseitig offenen Gehäuseschlitz eines Motorgehäuses 10 eingeführte Anschlußplatte, bei der ein in tangentialer Richtung radial außen das Motorgehäuse 10 überragender Teil der Anschlußplatte gleichzeitig als Abstützungshilfe der Anschlußplatte am Motorgehäuse 10 beim senkrecht zur Spulenachsrichtung aufzudrückenden Anschlußstecker und eine lappenförmige Unterlegkante 49 als eine den radialen Zug aufnehmende Lagesicherungshilfe beim Abziehen des Anschlußsteckers dienen kann; gleichzeitig wird durch die Unterlegkante 49 in vorteilhafter Weise die Isolationsstrecke zwischen dem Motorgehäuse 10 und den Wicklungsdrähten in dem Spulenkörper vergrößert.

## Patentansprüche

1. Verfahren zur Herstellung eines elektrischen Anschlußteils mit in einem Kunststoff-Isolationskörper eingespritzt gehaltenen elektrischen Kontakten mit aus dem Isolationskörper herausragenden Anschlußstiften (7,8,9), insbesondere einer an einem Stirnflansch (11) eines Spulenkörpers (1) gehaltenen Anschlußplatte (4) mit nach außen ragenden äußeren Stiftenden (71,81,91) für einen äußeren Leitungsstecker einerseits und nach innen ragenden inneren Stiftenden (72,82,92) für die Wicklungsenden einer vom Spulenkörper aufgenommenen Wicklung andererseits, **gekennzeichnet** durch zumindest folgende Verfahrensschritte:
a) die Anschlußstifte (7,8,9) werden in einem Wechselmagazin (WM1 bzw.WM2) entsprechend ihrer betriebsmäßigen gegenseitigen Lage in der Anschlußplatte vormagaziniert gehalten;
b) das Wechselmagazin (WM1 bzw.WM2) wird mit den positionierten Anschlußstiften (7,8,9) einer Spritzgußform (GF) für den Spulenkörper (1) zugeführt und bildet einen Abschlußteil der Spritzgußform (GF) im Bereich der am Spulenkörper (1) zu haltenden Anschlußplatte (4).

2. Verfahren nach Anspruch 1, **gekennzeichnet** durch den Verfahrensschritt:
c) in dem Wechselmagazin (WM) werden die Anschlußstift-Anordnungen für mehrere Anschlußplatten gehalten.

3. Verfahren nach Anspruch 1 und/oder 2, **gekennzeichnet** durch den Verfahrensschritt:
d) die Anschlußstifte (7,8,9) werden mittels durch Formöffnungen (42) gegendrückbarer Druckstücke während des Spritzgießens in ihrer Lage gesichert.

4. Verfahren nach einem der Ansprüche 1 bis 3, **gekennzeichnet** durch den Verfahrensschritt:
e) die Anschlußstifte (7,8,9) werden über einen dem Wechselmagazin (WM1 bzw.WM2) vorgeschalteten Rüttler (R1,R2,R3) vereinzelt und dem Wechselmagazin (WM1,WM2,WM3) lagerecht zugeführt.

5. Verfahren nach einem der Ansprüche 1 bis 3, **gekennzeichnet** durch den Verfahrensschritt:
f) die vorzugsweise aus Vierkantdraht gefertigten Anschlußstifte (7,8,9) werden dem Wechselmagazin (WM1,WM2,WM3) von einem Stangenmagazin (SM) zugeführt, in dem sie als vorgefertigte Teile in Reihe hintereinander magaziniert sind.

6. Verfahren nach einem der Ansprüche 1 bis 3, **gekennzeichnet** durch den Verfahrensschritt:
g) die Anschlußstifte (7,8,9) werden als Teile einer Drahtrolle (D1,D2,D3) durch entsprechendes Abtrennen und Biegen gebildet.

7. Verfahren nach einem der Ansprüche 1 bis 3, **gekennzeichnet** durch den Verfahrensschritt:
h) die Anschlußstifte (7,8,9) werden als Teile eines Blechstreifens durch Prägen oder Ausstanzen und/oder Biegen gebildet.

8. Verfahren nach einem der Ansprüche 1 bis 6, **gekennzeichnet** durch den Verfahrensschritt:
i) die Anschlußstifte (7,8,9) werden mit einer, insbesondere geprägten, endseitigen Anschrägung, versehen.

9. Verfahren nach einem der Ansprüche 1 bis 8, **gekennzeichnet** durch den Verfahrensschritt:
j) die Anschlußstifte (7,8,9) werden mit ihren aus dem Isolationskörper (Anschlußplatte 4) herausragenden inneren Stiftenden bzw. äußeren Stiftenden durch Öffnungen der Spritzgußform (GF) bzw. des Wechselmagazins (WM1,WM2,WM3) abgedichtet herausgeführt.

10. Verfahren nach einem der Ansprüche 1 bis 9, **gekennzeichnet** durch den Verfahrensschritt:
k) die äußeren Stiftenden (71,81,91) der Anschlußstifte (7,8,9) werden gegenüber den inneren Stiftenden (72,82,92) durch ein abgewinkeltes Zwischenstück (73,83,93) gegeneinander versetzt angeordnet und mit dem Zwischenstück derart in die Anschlußplatte (4,5,6) eingespritzt, daß die äußeren Stiftenden mit möglichst geringem gegenseitigem Abstand, vorzugsweise in Reihe, und die inneren Stiftenden mit möglichst großem gegenseitigem Abstand, vorzugsweise nicht fluchtend zueinander, gehalten werden.

11. Verfahren nach einem der Ansprüche 1 bis 10, **gekennzeichnet** durch den Verfahrensschritt:
l) die äußeren und die inneren Stiftenden sowie das abgewinkelte Zwischenstück werden als Teile eines einstückigen Runddrahtes gefertigt.

12. Verfahren nach einem der Ansprüche 1 bis 10, **gekennzeichnet** durch den Verfahrensschritt:
m) die äußeren und die inneren Stiftenden sowie das Zwischenstück werden als Teile eines einstückigen Vierkantdrahtes gefertigt.

13. Verfahren nach einem der Ansprüche 1 bis 12, **gekennzeichnet** durch den Verfahrensschritt:
n) die äußeren Stiftenden (71,81,91) werden im Rastermaß eines handelsüblichen Miniatur-Anschlußsteckers angeordnet.

14. Verfahren nach einem der Ansprüche 1 bis 13, **gekennzeichnet** durch den Verfahrensschritt:
o) die äußeren Stiftenden (71,81,91) werden innerhalb einer an die Anschlußplatte (4,5,6) angeformten Steckerwanne (45) angeordnet, mittels der ein äußerer Anschlußstecker relativ zu den äußeren Stiftenden führbar und/oder fixierbar ist.

15. Verfahren nach einem der Ansprüche 1 bis 14, **gekennzeichnet** durch den Verfahrensschritt:
p) die äußeren Stiftenden (71,81,91) und die inneren Stiftenden (72,82,92) ragen sowohl in Wickelstellung als auch in Gebrauchsstellung der Anschlußplatte senkrecht zur Spulenachsrichtung aus der Anschlußplatte heraus, jedoch in Gebrauchsstellung der Anschlußplatte um 180° gedreht gegenüber ihrer in der Wickelstellung der Anschlußplatte vorliegenden Anordnung.

16. Verfahren nach einem der Ansprüche 1 bis 14, **gekennzeichnet** durch den Verfahrensschritt:
q) in Wickelstellung der Anschlußplatte ragen die äußeren Stiftenden (71,81,91) in Spulenachsrichtung sowie die inneren Stiftenden (72,82,92) senkrecht zur Spulenachsrichtung und in Gebrauchsstellung der Anschlußplatte die äußeren Stiftenden (71,81,91) in Gegenrichtung zur Wickelstellung parallel zur Spulenachsrichtung sowie die inneren Stiftenden (72,82,92) in Gegenrichtung zur Wickelstellung senkrecht zur Spulenachsrichtung aus der Anschlußplatte heraus.

## Claims

1. Method of manufacturing an electric connection device with electric terminals moulded by injection in an insulating body of plastic material with connecting pins (7,8,9) projecting from the insulating body, more particularly from a connecting plate (4) held to a frontal flange (11) of a coil former (1) with external extremities of the pins (7,8,9) projecting toward the outside for an external line connector on the one hand and internal extremities of the pins (72,82,92) projecting toward the inside for the ends of a coil contained in the coil former, on the other hand.
**characterized** by the following method steps:
a) the connecting pins (7,8,9) are brought beforehand in a changing magazine (WM1 resp. WM2) of the connecting plate in accordance with their relative position of working;
b) the changing magazine (WM1 resp. WM2) is introduced with the positioned connecting pins (7,8,9) in an injection mould (GF) for the coil former (1) and forms a closing piece of the injection mould (GF) in the region of th connecting plate (4) held to the coil former (1).

2. Method according to claim 1, **characterized** by the method step:
c) the connecting pins arranged in the changing magazine are provided for many connecting plates.

3. Method according to claim 1 et/ou 2, **characterized** by the method step:
d) the connecting pins (7,8,9) are ensured in their position during injection by compressible supports introduced in shaped openings (42).

4. Method according to one of the claims 1 to 3, **characterized** by the method step:
e) the connecting pins (7,8,9) are guided individually and in correct position to the changing magazine by a vibrator (R1,R2,R3) provided in front of the changing magazine.

5. Method according to one of the claims 1 to 3, **characterized** by the method step:
f) the connecting pins (7,8,9) preferably produced by means of a wire of rectangular cross section are brought to the changing magazine (WM1,WM2,W3) from a bar feeding device (SM) in which they are stocked like, prefabricated pieces, in series and one behind the other.

6. Method according to one of the claims 1 to 3, **characterized** by the method step:
g) the connecting pins (7,8,9) are formed from a roll of wire (D1,D2,D3) by corresponding separation and bending.

7. Method according to one of the claims 1 to 3, **characterized** by the method step:
h) the connecting pins (7,8,9) are formed from a band of shit iron, by stamping, cutting and/or bending.

8. Method according to one of the claims 1 to 6, **characterized** by the method step:
i) the connecting pins (7,8,9,) are provided on one side with a particularly pronounced bevel.

9. Method according to one of the claims 1 to 8, **characterized** by the method step:
j) the connecting pins (7,8,9,) are brought out in water tight condition through openings of the injection mould, resp. changing magazine (WM1,WM2,WM3) with their internal, resp. their external extremities projecting from the insulating body (connecting plate 4).

10. Method according to one of the claims 1 to 9, **characterized** by the method step:
k) the external extremities (71,81,91) of the connecting pins (7,8,9) are displaced relatively to the internal extremities (72,82,92) of the connecting pins by an bent intermediate piece (73,83,93) and injected with the intermediate piece in the connecting plate (4,5, 6), in such a way that the external extremities of the pins are held preferably in series with a mutual distance as small as possible and the internal extremities of the pins with a mutual distance as great as possible, preferably not alined between them.

11. Method according to one of the claims 1 to 10, **characterized** by the method step:
l) the external and the internal extremities of the pins as well as the bent, intermediate piece are manufactured as parts of a round wire, in one piece.

12. Method according to one of the claims 1 to 10, **characterized** by the method step:
m) the external and internal extremities of the pins as well as the intermediate piece are manufactured as parts of a rectangular wire, in one piece.

13. Methed according to one of the claims 1 to 12, **characterized** by the method step:
n) the external extremities (71,81,91) of the pins are arranged according to standard dimensions of a common miniature connector of commerce.

14. Method according to one of the claims 1 to 13, **characterized** by the method step:
o) the external extremities of the pins (71,81,91) are arranged within a connecting bowl (45) formed in the connecting plate (4,5,6) by means of which an external connector may be guided and/or fastened, relatively to the external extremities of the pins.

15. Method according to one of the claims 1 to 14, **characterized** by the method step:
p) the external (71,81,91) and internal (72,82,92) extremities of the pins project from the connecting plate as well in the coiling position as in position of utilization of the connecting plate, perpendicularly to the direction of the axis of the coil, however rotated by 180° relatively to their preceding arrangement in the coiling position of the connecting plate.

16. Method according to one of the claims 1 to 14, **characterized** by the method step:
q) in the coiling position of the connecting plate, the external extremities (71,81,91) of the pins project toward the direction of the axis of the coil and the internal extremities (72,82,92) of the pins perpendicularly to the direction of the axis of the coil, and in position of utilization of the connecting plate the external extremities (71,81,81) of the pins project to the direction opposite to the coiling position, parallel to the direction of the axis of the coil, and the internal extremities (72,82,92) of the pins toward the direction opposite to the coiling direction, perpendicularly to the direction of the axis of the coil.

## Revendications

1. Procédé de fabrication d'une pièce de raccordement électrique avec des contacts électriques moulés par injection dans un corps isolant en matériau synthétique, avec des broches de raccordement (7,8,9) dépassant du corps isolant, plus particulièrement d'une plaque de raccordement (4) tenue à une collerette frontale (11) d'un corps de bobine (1) avec des extrémités extérieures (71, 81,91) des broches (7,8,9) dépassant vers l'extérieur pour un connecteur de ligne extérieur d'une part et des extrémités intérieures (72,82,92) des broches dépassant vers l'intérieur pour les extrémités d'enroulement d'un bobinage contenu dans le corps de bobine d'autre part,
**caractérisé** par les étapes de procédé suivantes:
a) les broches de raccordement (7,8,9) sont préstockées dans un magasin de renouvellement (WM1 resp. WM2) de la plaque de raccordement en correspondance de leur position relative de service;
b) le magasin de renouvellement (WM1 resp. WM2) est introduit avec les broches de raccordement (7,8,9) positionnées dans un moule pour coulage par injection (GF) pour le corps de bobine (1) et forme une pièce de fermeture du moule de coulage par injection (GF) dans la région de la plaque de raccordement (4) tenue au corps de bobine (1).

2. Procédé selon la revendication 1, **caractérisé** par l'étape de procédé:
c) les dispositions des broches de raccordement dans le magasin de renouvellement sont prévues pour plusieurs plaques de raccordement.

3. Procédé selon la revendiction 1 ou 2, **caractérisé** par l'étape de procédé:
d) les broches de raccordement (7,8,9) sont assurées dans leur position pendant l'injection par des supports compressibles introduits dans des ouvertures de forme (42).

4. Procédé selon l'une des revendications 1 à 3, **caractérisé** par l'étape de procédé:
e) les broches de raccordement (7,8,9) sont guidées individuellement et en position correcte au magasin de renouvellement par un vibreur (R1,R2,R3) placé devant le magasin de renouvellement.

5. Procédé selon l'une des revendications 1 à 3, **caractérisé** par l'étape de procédé:
f) les broches de raccordement (7,8,9) produites de préférence à l'aide d'un fil de section rectangulaire sont amenées au magasin de renouvellement (WM1, WM2, WM3) à partir d'un dispositif d'alimentation en barres (SM) dans lequel elles sont emmagasinées comme pièces préfabriquées en série, l'une derrière l'autre.

6. Procédé selon l'une des revendications 1 à 3, **caractérisé** par l'étape de procédé:
g) les broches de raccordement (7,8,9) sont formées à partir d'un rouleau de fil (D1,D2,D3) par séparation et pliage correspondant.

7. Procédé selon l'une des revendications 1 à 3, **caractérisé** par l'étape de procédé:
h) les broches de raccordement (7,8,9) sont formées à partir d'une bande de tôle, par étampage, découpage et/ou pliage.

8. Procédé selon l'une des revendications 1 à 6, **caractérisé** par l'étape de procédé:
i) les broches de raccordement (7,8,9) sont pourvues d'un côté d'un biseau particulièrement prononcé.

9. Procédé selon l'une des revendications 1 à 8, **caractérisé** par l'étape de procédé;
j) les broches de raccordement (7,8,9) sont sorties de manière étanche à travers des ouvertures du moule de coulage par injection (GF) resp. du magasin de renouvellement (WM1,WM2,WM3) avec leur extrémités intérieures, resp. leurs extrémités extérieures dépassantes du corps isolant (plaque de raccordement 4).

10. Procédé selon l'une des revendications 1 à 9, **caractérisé** par l'étape de procédé:
k) les extrémités extérieures (71,81,91) des broches de raccordement (7,8,9) sont déplacées relativement aux extrémités intérieures (72,82,92) des broches par une pièce intermédiaire (73,83,93) pliée et injectées avec la pièce intermédiaire dans la plaque de raccordement (4,5,6), de manière que les extrémités extérieures des broches sont tenues de préférence en série avec une distance mutuelle aussi petite que possible, et les extrémités intérieures des broches avec une distance mutuelle aussi grande que possible, de préférence non alignées entre elles.

11. Procédé selon l'une des revendications 1 à 10, **caractérisé** par l'étape de procédé:
l) les extrémités extérieures et intérieures des broches ainsi que la pièce intermédiaire pliée sont fabriquées comme parties d'un fil rond, en une pièce.

12. Procédé selon l'une des revendications 1 à 10, **caractérisé** par l'étape de procédé:
m) les extrémités extérieures et intérieures des broches ainsi que la pièce intermédiaire sont fabriquées comme parties d'un fil rectangulaire, en une pièce.

13. Procédé selon l'une des revendications 1 à 12, **caractérisé** par l'étape de procédé:
n) les extrémité extérieures (71,81,91) des broches sont disposées selon une trame modulaire d'un connecteur miniature habituel du commerce.

14. Procédé selon l'une des revendications 1 à 13, **caractérisé** par l'étape de procédé;
o) les extrémités extérieures (71,81,91) des broches sont disposées à l'intérieur d'une cuvette de raccordement (45) formée dans la plaque de raccordement (4,5,6), à l'aide de laquelle un connecteur extérieur peut être guidé et/ou fixé relativement aux extrémités extérieures des broches.

15. Procédé selon l'une des revendications 1 à 14, **caractérisé** par l'étape de procédé:
p) les extrémités extérieures (71,81,91) et intérieures (72,82,92) des broches dépassent de la plaque de raccordement à la fois en position d'enroulement et en position d'utilisation de la plaque de raccordement, perpendiculairement à la direction de l'axe de la bobine, toutefois tournées de 180° relativement à leur disposition précédente en position d'enroulement de la plaque de raccordement.

16. Procédé selon l'une des revendications 1 à 14, **caractérisé** par l'étape de procédé:
q) en position d'enroulement de la plaque de raccordement, les extrémités extérieurs (71,81,91) des broches dépassent en direction de l'axe de la bobine et les extrémités intérieures (72,82,92) des broches dépassent perpendiculairement à la direction de l'axe de la bobine, et en position d'utilisation de la plaque de raccordement les extrémités extérieures (71,81,91) des broches dépassent en direction opposée à la position d'enroulement, parallèlement à la direction de l'axe de la bobine, et les extrémités intérieures (72,82,92) des broches en direction opposée à la position d'enroulement, perpendiculairement à la direction de l'axe de la bobine.
